# FASCICULE DE BREVET EUROPEEN

(11) **EP 1 244 885 B1**
(45) Date de publication et mention de la délivrance du brevet: **08.03.2006**
(21) Numéro de dépôt: 00985349.0
(22) Date de dépôt: 29.11.2000
(51) Int. Cl.: F16L 47/00

(54) **DISPOSITIF DE RACCORDEMENT POUR DEUX TUYAUX EN MATERIAU COMPOSITE A BASE DE MATIERE THERMOPLASTIQUE**
VORRICHTUNG ZUM VERBINDEN VON ZWEI ROHREN AUS KUNSTSTOFF
DEVICE FOR CONNECTING TWO PIPES CONSISTING OF A COMPOSITE MATERIAL BASED ON A THERMOPLASTIC SUBSTANCE

(30) Priorité: 05.01.2000 FR 0000073
(43) Date de publication de la demande: 02.10.2002
(73) Titulaire: Saint-Gobain Vetrotex France S.A., 73000 Chambéry (FR)
(72) Inventeur: DEBALME, Jean-Paul, F-73000 Chambéry (FR); GANDRE, Gérard, F-70140 Pesmes (FR)
(74) Mandataire: Muller, René
(86) Numéro de dépôt international: PCT/FR2000/003326
(87) Numéro de publication internationale: WO 2001/050059

(56) Documents cités:
- FR-A- 681 112
- FR-A- 1 312 753
- FR-A- 2 616 199
- FR-A- 2 728 051

## Description

La présente invention concerne le raccordement de tuyaux en matériau composite constitué de fibres de renforcement et de matière thermoplastique.

De tels tuyaux, utilisés notamment pour véhiculer des fluides sous pression, sont généralement préférés à des tuyaux en fonte ou en ciment en raison de leur poids bien moins important rendant par conséquent leur manipulation sur chantier plus aisée.
Dans toute installation, il est bien entendu nécessaire d'assurer la continuité des tuyaux par un raccordement étanche et assurant une résistance efficace aux contraintes. On connaît d'après la demande de brevet FR 2 728 051 un dispositif de raccordement pour relier une extrémité d'un tube composite à base de matière thermoplastique renforcée à celle d'un autre tube composite. Ce dispositif comprend un manchon de liaison et un organe d'étanchéité annulaire disposé à l'intérieur du manchon de liaison, le manchon étant pourvu d'un filetage sur sa paroi interne destiné à coopérer avec des filetages complémentaires ménagés dans l'épaisseur et à la surface externe des extrémités des deux tubes à raccorder. Selon une caractéristique essentielle de ce dispositif, le filetage du manchon de liaison s'étend sur une longueur minimale qui dépend du diamètre des fils constituant la matière de renforcement des tubes, de manière à obtenir une résistance à l'arrachement supérieure à la résistance à la rupture de l'armature.

Un des inconvénients de ce dispositif de raccordement concerne le filetage agencé dans l'épaisseur des tubes, à leurs extrémités. En effet, sur un chantier, lorsqu'il s'agit d'adapter des longueurs de tubes et par exemple de couper un tube pour le raccourcir, une partie du filetage, voire même la totalité, est nécessairement perdue; or la réalisation sur un chantier d'un autre filetage après découpe est difficilement réalisable.

Par ailleurs, le dispositif de raccordement de cette demande coopère directement avec des filetages prévus comme précité aux extrémités des tubes et agencés directement dans l'épaisseur de ces tubes, ce qui nécessite de fabriquer des tubes dont l'épaisseur est suffisamment importante afin de pouvoir intégrer le filetage. Or la couche qui est ajoutée dans l'épaisseur des tubes n'est en fait utile qu'aux extrémités des tubes portant les filetages, et cependant, cette couche est présente sur toute la longueur du tube car les filetages d'extrémité ne sont formés qu'après fabrication du corps entier des tubes. Il s'avère donc indispensable de prévoir davantage de matière pour la fabrication de tels tubes, ce qui n'est pas sans engendrer un coût supplémentaire en matière première et une augmentation du poids final d'un tube non négligeables.

L'invention a donc pour but de fournir un dispositif de raccordement pour des tuyaux composites qui soit aisé à assembler aussi bien en usine que sur chantier et qui n'augmente pas le prix de revient des tubes composites et par conséquent d'une installation, tout en assurant une résistance et une étanchéité satisfaisantes des tuyaux dans la zone de raccordement.

Selon l'invention, le dispositif de raccordement de deux tuyaux en matériau composite à base de matière thermoplastique renforcée comprend un manchon destiné à être assemblé avec d'une part, une extrémité du premier tuyau, et d'autre part, une extrémité du second tuyau, le manchon étant pourvu sur sa paroi interne d'au moins un filetage, ainsi que des moyens d'étanchéité pour assurer l'étanchéité dans la zone de raccordement, et est caractérisé en ce qu'il comprend un premier embout destiné à être solidarisé avec l'extrémité du premier tuyau et un second embout destiné à être solidarisé avec l'extrémité du second tuyau, chaque embout comportant sur au moins une partie de sa surface externe un filetage destiné à coopérer de manière complémentaire avec le filetage du manchon.

L'utilisation d'embouts filetés rapportés évite ainsi, contrairement à l'état de la technique, de réaliser une surépaisseur du revêtement externe du tuyau et cela sur toute sa longueur.

De plus, selon l'invention, les deux tuyaux sont constitués d'une matrice en matière thermoplastique, d'une couche en matière renforcée d'enrobage de ladite matrice, et d'un revêtement en matière thermoplastique recouvrant ladite couche d'enrobage, et les embouts présentent au moins leur surface interne constituée dans la même matière thermoplastique que celle du revêtement des tuyaux.

Cette identité dans la matière permet avantageusement de rapporter les embouts après leur chauffage autour des extrémités des deux tuyaux, chauffées elles aussi, pour les souder entre eux, le refroidissement réalisant la solidarisation.

Cette fixation des embouts par soudage peut ainsi être réalisée aussi bien en usine que sur chantier, ce qui est avantageux lorsque la longueur d'un tuyau doit être adaptée sur le chantier en le coupant, les embouts s'adaptent et sont alors rapportés sur place facilement.

Avantageusement, la longueur des embouts est comprise entre 0,5 et 2 fois le diamètre des tuyaux présentant une forme cylindrique.

De préférence, la couche d'enrobage des tuyaux et la couche externe du manchon sont à base d'une matière première constituée de filaments de verre et de filaments de matière thermoplastique co-mêlés entre eux, l'épaisseur de la couche externe du manchon étant au moins égale à celle de la couche d'enrobage des tuyaux.

Selon une autre caractéristique, le manchon comporte sur sa paroi interne deux filetages formés en sens inverse et disposés de part et d'autre d'un plan médian transversal à l'axe longitudinal du corps du manchon, les deux filetages étant destinés à coopérer avec les filetages respectifs des deux embouts dont le sens du pas est adapté à celui du pas de chaque filetage du manchon. Des moyens de repérage du sens du pas du filetage sont d'ailleurs prévus sur les embouts et le manchon.

Avantageusement, le filetage ou les filetages du manchon sont formés dans une épaisseur constituée par le même matériau que celui de la surface extérieure des embouts dans laquelle sont ménagés leurs filetages.

Selon encore une autre caractéristique, le manchon comporte selon son plan médian une gorge destinée à accueillir des moyens d'étanchéité contre lesquels sont destinées à être plaquées les extrémités des tuyaux pourvues des embouts.

Avantageusement, les moyens d'étanchéité présentent une souplesse suffisante pour épouser intimement la forme des sections libres des extrémités des tuyaux.

D'autres caractéristiques et avantages de l'invention apparaîtront à la lecture de la description qui suit en regard des dessins sur lesquels :
- la figure 1 est une vue éclatée en coupe du dispositif de raccordement de l'invention destiné à relier deux extrémités de tuyaux;

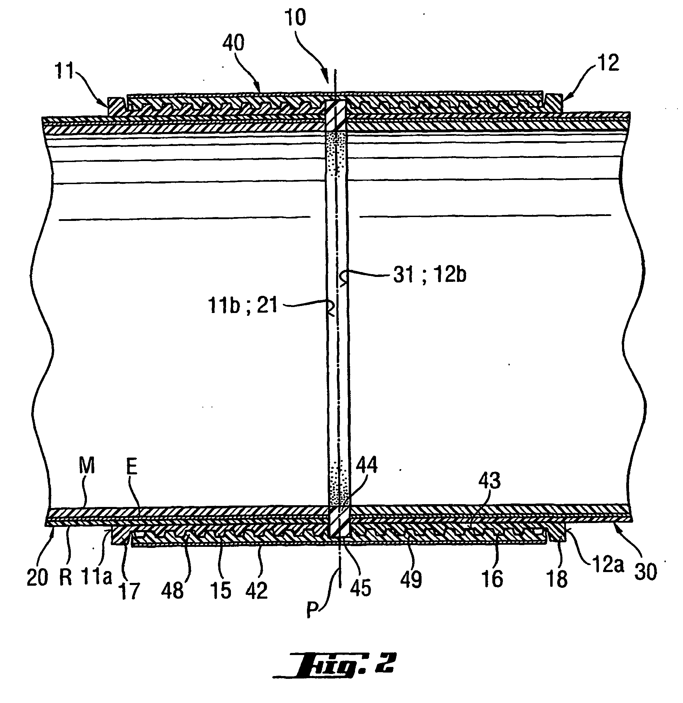

- la figure 2 est une vue en coupe du dispositif de raccordement assemblé à deux extrémités de tuyaux.

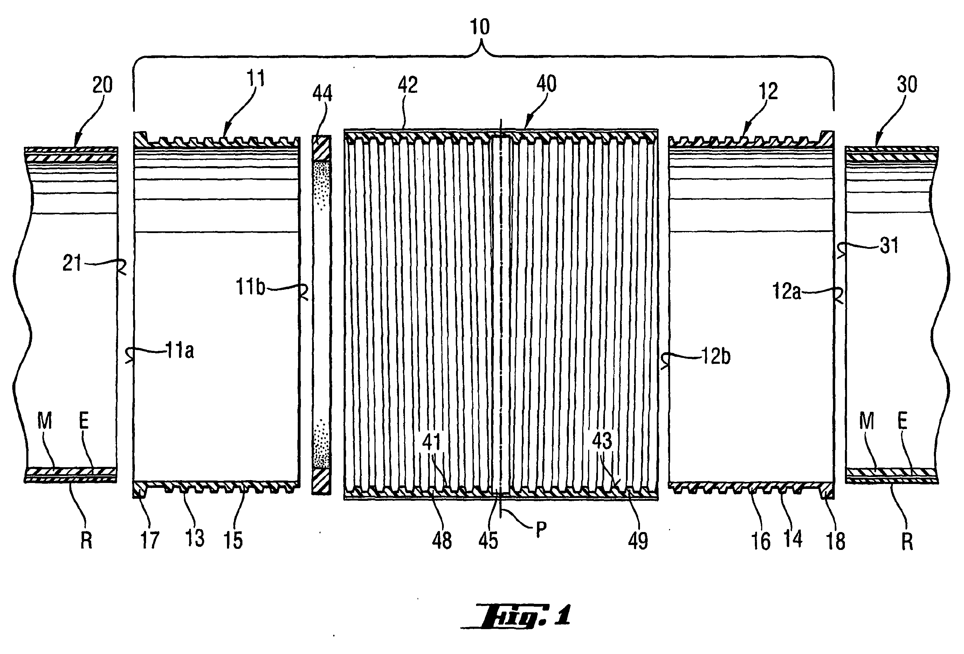

Le dispositif de raccordement 10 illustré à la figure 1 a pour but d'assembler deux tuyaux cylindriques 20 et 30 en matériau composite à base de matière thermoplastique renforcée.

Chaque tuyau est en particulier constitué d'une matrice M en matière thermoplastique, par exemple en polyéthylène, d'une couche d'enrobage E de renforcement entourant la matrice M et d'un revêtement R en matière thermoplastique recouvrant la couche d'enrobage, de préférence identique à la matière de la matrice M. La couche d'enrobage E est avantageusement constituée de matière thermoplastique, en polyéthylène par exemple, dans laquelle sont noyés des fils continus de verre, la matière première de cette couche étant avantageusement du TWINTEX^{→} commercialisé par la société VETROTEX sous forme de fil composite de filaments de matière thermoplastique et filaments de verre cô-mêlés entre eux. La constitution de tels tuyaux est notamment décrite dans la demande de brevet français FR 98/132 93.

Les tuyaux 20 et 30 comportent respectivement une extrémité 21 et une extrémité 31 de section identique ou non destinées à être aboutées l'une à l'autre.

Le dispositif de raccordement 10 comprend deux embouts creux 11 et 12, destinés chacun à être solidarisés autour des extrémités 21 et respectivement 31 des tuyaux, et un manchon 40 destiné à relier les deux tuyaux par son association aux embouts 11 et 12. La fabrication de dispositifs de raccordement 10 selon l'invention est effectué en usine avec des moyens automatisés propres à réduire les coûts et en assurer la précision.

Chaque embout 11, 12 est en matière thermoplastique de préférence identique à celle du revêtement R des tuyaux. En effet, le procédé de solidarisation des embouts avec les tuyaux s'effectuant par emboîtement-soudage facilite l'assemblage et assure une meilleure tenue mécanique de l'ensemble.

Les embouts 11 et 12 comportent sur leur surface externe 13, et respectivement 14, au moins sur une partie de leur longueur équivalente à la demi-longueur du manchon 40, des filetages respectifs 15 et 16.

Chaque embout 11, 12 comporte une extrémité 11a d'engagement de l'embout autour du tuyau, respectivement 12a, et une extrémité opposée d'aboutement 11b, respectivement 12b. De façon à résister aux efforts de pression dus au fluide circulant dans les tuyaux, la longueur des embouts 11 et 12 est de préférence comprise entre 0,5 et 2 fois le diamètre des tuyaux 20 et 30.

De manière optionnelle, les extrémités d'engagement 11a et 12a peuvent présenter des collerettes externes 17 et respectivement 18 qui sont ainsi en saillie par rapport aux filetages 15, 16 de manière à servir d'éléments de protection desdits filetages lors de la manipulation sur chantier des embouts filetés et/ou des tuyaux pourvus des embouts filetés. Toutefois, on préférera pour une simplification de la fabrication ne pas procéder à l'addition des collerettes 17, 18; les embouts arriveront sur chantier munis d'une coque de protection enveloppant les filetages.

Le manchon 40 est constitué d'une couche interne 41 en matière thermoplastique, telle que celle des embouts en polyéthylène, et d'une couche externe d'enrobage 42 de la couche interne, en matériau composite de renforcement tel que du TWINTEX^{→} pour résister aux efforts de pression. Notons que la couche 42 est d'épaisseur au moins égale à celle de la couche d'enrobage E en matière composite de renforcement des tuyaux pour établir une continuité de résistance à la pression entre les tuyaux et les embouts. Une couche de protection, non montrée sur les dessins, pourra être prévue pour entourer la couche externe d'enrobage 42, cette couche de protection sera de préférence en matière thermoplastique.

Le manchon comprend sur sa paroi interne 43, dans l'épaisseur de la couche interne 41, s'étendant axialement sur le corps du manchon et de part et d'autre d'un plan médian P transversal à l'axe longitudinal du corps, un filetage 48 et respectivement un filetage 49, les filetages étant avantageusement ménagés en sens inverse. Les filetages 48 et 49 sont destinés à coopérer, respectivement, avec les filetages 15 et 16 des embouts.

Bien entendu, les filetages 48, 49 ayant un pas de sens opposé, les filetages 15 et 16 des embouts présentent aussi un pas de sens opposé mais chacun de même sens que le filetage du manchon lui étant destiné. Il va de soi que pour les tuyaux arrivant sur chantier déjà équipés des embouts, chaque embout d'extrémité présente un pas de sens opposé. Afin de rendre rapide l'opération de raccordement, des moyens de repérage du sens du pas sont prévus à la fois sur les embouts et sur chaque côté fileté du manchon.

Enfin, sont prévus des moyens d'étanchéité 44 assurant l'étanchéité du raccordement des deux tuyaux 20 et 30, ces moyens d'étanchéité devant être inertes vis-à-vis du fluide circulant dans les tuyaux.

Ces moyens d'étanchéité sont ainsi disposés, une fois le raccordement effectué, dans la zone de raccordement au niveau du plan médian P du manchon 40. En raison de l'irrégularité éventuelle des sections libres des extrémités 21 et 31 des tuyaux qui peuvent parfois être recoupées sur chantier, les moyens d'étanchéité doivent présenter suffisamment de souplesse pour épouser parfaitement la forme des sections libres afin de garantir une étanchéité totale.

Les moyens d'étanchéité peuvent consister en un joint central semi-rigide qui est engagé dans une gorge d'accueil annulaire 45 agencée dans la surface interne 41 du manchon selon le plan médian P, le joint présentant ses faces latérales, en saillie des filetages 48 et 49, lesquelles sont destinées à être écrasées par les extrémités libres 21 et 31 des deux tuyaux.

En variante, on peut plutôt prévoir une rondelle rigide en matière thermoplastique présentant des faces latérales contre lesquelles sont collés des joints, la rondelle étant insérée dans la gorge annulaire 45.

Une autre solution de moyens d'étanchéité peut consister en deux joints disposés aux deux extrémités respectives 21 et 31 des tuyaux qui sont destinés à se plaquer l'un contre l'autre une fois le manchon vissé après les extrémités 21 et 31 munies des embouts. Ces joints seraient alors mis en place sur les extrémités 21 et 31 lors du soudage des embouts.

Le principe de raccordement de deux tuyaux au moyen du dispositif de l'invention va à présent être expliqué.

Il s'agit en premier lieu d'assembler les embouts 11 et 12 autour des extrémités 21 et respectivement 31 des deux tuyaux. A cette fin, par un procédé connu pour ce type de matériau à base de thermoplastique utilisé pour la fabrication des tuyaux, on chauffe les parois internes de chaque embout et les parois externes des extrémités des tuyaux; après ramolissement de la matière on réalise l'emboîtement des extrémités des tuyaux dans les embouts et le refroidissement assure ensuite la solidarisation des pièces.

Puis on place les moyens d'étanchéité 44, tel qu'un joint semi-rigide, dans la gorge 45 du manchon.

Enfin on pose les extrémités 21 et 31 des tuyaux pourvues des embouts sur un berceau pour garantir leur alignement, on les met en contact avec chacune des extrémités du manchon 40 et on tourne le manchon dans un sens donné, les filetages 48 et 49 étant en sens inverse, le vissage autour des deux tuyaux s'effectue simultanément. Bien entendu, le couple de serrage doit être suffisant pour déformer le joint afin que celui-ci épouse intimement la forme des sections libres des extrémités 21 et 31 des tuyaux de manière à assurer la parfaite étanchéité du raccordement. L'opération est alors terminée, les extrémités des tuyaux étant plaquées serrées contre les faces latérales du joint 44 pour garantir l'étanchéité.

## Revendications

1. Dispositif de raccordement comprenant deux tuyaux en matériau composite à base de matière thermoplastique renforcée, un manchon (40) destiné à être assemblé avec d'une part, une extrémité (21) du premier tuyau (20), et d'autre part, une extrémité (31) du second tuyau (30), le manchon étant pourvu sur sa paroi interne (43) d'au moins un filetage (48), ainsi que des moyens d'étanchéité (44) pour assurer l'étanchéité dans la zone de raccordement, **caractérisé en ce qu'**il comprend un premier embout (11) destiné à être solidarisé avec l'extrémité (21) du premier tuyau et un second embout (12) destiné à être solidarisé avec l'extrémité (31) du second tuyau, chaque embout comportant sur au moins une partie de sa surface externe (13, 14) un filetage (15, 16) destiné à coopérer de manière complémentaire avec le filetage (48) du manchon (40) et **en ce que** les deux tuyaux (20, 30) sont constitués d'une matrice (M) en matière thermoplastique, d'une couche en matière renforcée d'enrobage (E) de ladite matrice, et d'un revêtement (R) en matière thermoplastique recouvrant ladite couche d'enrobage (E), et les embouts (11, 12) présentent au moins leur surface interne constituée dans la même matière thermoplastique que celle du revêtement (R) des tuyaux.

2. Dispositif de raccordement selon la revendication 1, **caractérisé en ce que** les embouts (11, 12) sont destinés à être rapportés après chauffage autour des extrémités (21, 31) des deux tuyaux, chauffées elles aussi, le soudage des embouts et des tuyaux s'effectuant par solidarisation après refroidissement.

3. Dispositif de raccordement selon la revendication 1 ou 2, **caractérisé en ce que** le manchon (40) comporte sur sa paroi interne (43) deux filetages (48, 49) formés en sens inverse et disposés de part et d'autre d'un plan médian (P) transversal à l'axe longitudinal du corps du manchon, les deux filetages étant destinés à coopérer avec les filetages respectifs (15, 16) des deux embouts (11,12) dont le sens du pas est adapté à celui du pas de chaque filetage (48,49) du manchon.

4. Dispositif de raccordement selon la revendication 3, **caractérisé en ce que** des moyens de repérage du sens du pas du filetage sont prévus sur les embouts (11, 12) et le manchon (40).

5. Dispositif de raccordement selon la revendication 3, **caractérisé en ce que** le manchon (40) comporte selon son plan médian (P) une gorge (45) destinée à accueillir des moyens d'étanchéité (44) contre lesquels sont destinées à être plaquées les extrémités (21, 31) des tuyaux pourvus des embouts (11, 12).

6. Dispositif de raccordement selon l'une quelconque des revendications précédentes, **caractérisé en ce que** le filetage ou les filetages (48, 49) du manchon sont formés dans une épaisseur constituée par le même matériau que celui de la surface extérieure (13, 14) des embouts dans laquelle sont ménagés leurs filetages (15, 16).

7. Dispositif de raccordement selon la revendication 1, **caractérisé en ce que** le manchon (40) comporte une couche externe d'enrobage (42) dont la matière est identique à celle de la couche d'enrobage (E) des tuyaux, la matière étant constituée de filaments de verre et de filaments de matière thermoplastique co-mêlés entre eux.

8. Dispositif de raccordement selon la revendication 7, **caractérisé en ce que** l'épaisseur de la couche externe d'enrobage (42) du manchon est au moins égale à celle de la couche d'enrobage (E) des tuyaux.

9. Dispositif de raccordement selon l'une quelconque des revendications précédentes, **caractérisé en ce que** les moyens d'étanchéité (44) présentent une souplesse suffisante pour épouser intimement la forme des sections libres des extrémités (21, 31) des tuyaux.

10. Dispositif de raccordement selon l'une quelconque des revendications précédentes, **caractérisé en ce que** la longueur des embouts est comprise entre 0,5 et 2 fois le diamètre des tuyaux (20, 30) présentant une forme cylindrique.

## Patentansprüche

1. Rohrverbindung, die zwei Rohre aus einem Verbundmaterial auf der Basis eines verstärkten Thermoplasts, eine Muffe (40), die vorgesehen ist, einerseits mit einem Ende (21) des ersten Rohrs (20) und andererseits mit einem Ende (31) des zweiten Rohrs (30) verbunden zu werden und auf ihrer Innenwand (43) mit mindestens einem Innengewinde (48) versehen ist, sowie Dichtungsmittel (44) zum Sicherstellen der Dichtheit in dem Verbindungsbereich umfasst, **dadurch gekennzeichnet, dass** sie ein erstes Endstück (11), das vorgesehen ist, mit dem Ende (21) des ersten Rohrs fest verbunden zu werden, und ein zweites Endstück (12), das vorgesehen ist, mit dem Ende (31) des zweiten Rohrs fest verbunden zu werden, umfasst, wobei jedes Endstück auf wenigstens einem Teil seiner Außenfläche (13, 14) ein Außengewinde (15, 16) umfasst, das vorgesehen ist, komplementär mit dem Innengewinde (48) der Muffe (40) zusammenzuwirken, dass die zwei Rohre (20, 30) aus einer Matrix (M) aus einem Thermoplast, einer diese Matrix ummantelnden Schicht (E) aus einem verstärkten Material und einer Beschichtung (R) aus einem Thermoplast, welche die Ummantelungsschicht (E) bedeckt, bestehen, und die Endstücke (11, 12) auf wenigstens ihrer Innenfläche aus demselben Thermoplast wie demjenigen der Beschichtung (R) der Rohre bestehen.

2. Rohrverbindung nach Anspruch 1, **dadurch gekennzeichnet, dass** die Endstücke (11, 12) vorgesehen sind, nach Erwärmung um die Enden (21, 31) der zwei Rohre, die ebenfalls erwärmt worden sind, angesetzt zu werden, wobei das Verschweißen der Endstücke und der Rohre durch Verfestigung nach Abkühlung erfolgt.

3. Rohrverbindung nach Anspruch 1 oder 2, **dadurch gekennzeichnet, dass** die Muffe (40) auf ihre Innenwand (43) zwei Innengewinde (48, 49) umfasst, die im umgekehrten Sinn gebildet und auf beiden Seiten einer Mittenebene (P) angeordnet sind, die quer zur Längsachse des Körpers der Muffe verläuft, wobei die zwei Innengewinde vorgesehen sind, mit den jeweiligen Außengewinden (15, 16) der zwei Endstücke (11, 12) zusammenzuwirken, deren Steigungsrichtung an diejenige der Steigung des jeweiligen Innengewindes (48, 49) der Muffe angepasst ist.

4. Rohrverbindung nach Anspruch 3, **dadurch gekennzeichnet, dass** die Mittel zum Erkennen der Steigungsrichtung des Gewindes auf den Endstücken (11, 12) und der Muffe (40) vorgesehen sind.

5. Rohrverbindung nach Anspruch 3, **dadurch gekennzeichnet, dass** die Muffe (40) in ihrer Mittenebene (P) eine Nut (45) enthält, die vorgesehen ist, Dichtungsmittel (44) aufzunehmen, gegen welche vorgesehen ist, die Enden (21, 31) der mit den Endstücken (11, 12) versehenen Rohre anzudrücken.

6. Rohrverbindung nach einem der vorhergehenden Ansprüche, **dadurch gekennzeichnet, dass** das/die Innengewinde (48, 49) der Muffe mit einer Dicke ausgebildet ist/sind, die aus demselben Material wie demjenigen der Außenfläche (13, 14) der Endstücke besteht, in welcher deren Außengewinde (15, 16) angebracht sind.

7. Rohrverbindung nach Anspruch 1, **dadurch gekennzeichnet, dass** die Muffe (40) eine äußere Ummantelungsschicht (42) um fasst, deren Material gleich demjenigen der Ummantelungsschicht (E) der Rohre ist, wobei das Material aus miteinander vermischten Glas- und Thermoplastfilamenten besteht.

8. Rohrverbindung nach Anspruch 7, **dadurch gekennzeichnet, dass** die Dicke der äußeren Ummantelungsschicht (42) der Muffe wenigstens gleich derjenigen der Ummantelungsschicht (E) der Rohre ist.

9. Rohrverbindung nach einem der vorhergehenden Ansprüche, **dadurch gekennzeichnet, dass** die Dichtungsmittel (44) eine Nachgiebigkeit besitzen, die ausreicht, damit sie sich eng an die Form der freien Abschnitte der Enden (21, 31) der Rohre anschmiegen.

10. Rohrverbindung nach einem der vorhergehenden Ansprüche, **dadurch gekennzeichnet, dass** die Länge der Endstücke das 0,5- bis 2fache des Durchmessers der Rohre (20, 30), die eine zylindrische Form besitzen, beträgt.

## Claims

1. Device for coupling comprising two pipes made of composite material based on a reinforced thermoplastic, a sleeve (40) intended to be joined, on one side, to an end (21) of the first pipe (20) and, on the other side, to an end (31) of the second pipe (30), the sleeve being provided on its internal wall (43) with at least one threading (48), together with sealing means (44) for creating a seal in the coupling zone, **characterized in that** it comprises a first end-piece (11) intended to be fastened to the end (21) of the first pipe and a second end-piece (12) intended to be fastened to the end (31) of the second pipe, each end-piece having over at least part of its external surface (13, 14) a threading (15, 16) intended to engage in a complementary manner with the threading (48) of the sleeve (40), and **in that** the two pipes (20, 30) consist of a thermoplastic matrix (M), of a layer (E) made of reinforced material for coating the said matrix and of a thermoplastic jacket (R) covering the said coating layer (E), and the end-pieces (11, 12) have at least their internal surface made of the same thermoplastic as that of the jacket (R) of the pipes.

2. Coupling device according to Claim 1, **characterized in that** the end-pieces (11, 12) are intended to be attached, after they have been heated, around the ends (21, 31) of the two pipes, these ends also being heated, and the end-pieces and the pipes are welded together by interlocking after cooling.

3. Coupling device according to claim 1 or 2, **characterized in that** the sleeve (40) has on its internal wall (43) two threadings (48, 49) formed in opposite directions and located on either side of a mid-plane (P) transverse to the longitudinal axis of the body of the sleeve, the two threadings being intended to engage with the respective threadings (15, 16) of the two end-pieces (11, 12), the hand of the threadings of which is matched to the hand of each threading (48, 49) of the sleeve.

4. Coupling device according to Claim 3, **characterized in that** means are provided on the end-pieces (11, 12) and on the sleeve (40) for identifying the hand of the threading.

5. Coupling device according to Claim 3, **characterized in that** the sleeve (40) includes, in its mid-plane (P), a groove (45) intended to accommodate sealing means (44) against which those ends (21, 31) of the pipes provided with the end-pieces (11, 12) are intended to be pressed.

6. Coupling device according to any one of the preceding claims, **characterized in that** the threading or threadings (48, 49) of the sleeve are formed in a thickness made of the same material as that of the outer surface (13, 14) of the end-pieces, in which their threadings (15, 16) are made.

7. Coupling device according to Claim 1, **characterized in that** the sleeve (40) includes an external coating layer (42) whose material is identical to that of the coating layer (E) of the pipes, the material consisting of commingled glass filaments and thermoplastic filaments.

8. Coupling device according to Claim 7, **characterized in that** the thickness of the external coating layer (42) of the sleeve is at least equal to that of the coating layer (E) of the pipes.

9. Coupling device according to any one of the preceding claims, **characterized in that** the sealing means (44) are sufficiently flexible to intimately follow the shape of the free cross sections of the ends (21, 31) of the pipes.

10. Coupling device according to any one of the preceding claims, **characterized in that** the length of the end-pieces is between 0.5 and 2 times the diameter of the pipes (20, 30) which are of cylindrical shape.
